(19) Europäisches Patentamt
European Patent Office
Office européen des brevets

(11) EP 3 809 500 A1

(12) **EUROPEAN PATENT APPLICATION**
published in accordance with Art. 153(4) EPC

(43) Date of publication:
**21.04.2021 Bulletin 2021/16**

(21) Application number: **19819492.0**

(22) Date of filing: **15.05.2019**

(51) Int Cl.:
***H01M 4/62** (2006.01)* ***C08F 214/22** (2006.01)*
***H01M 4/139** (2010.01)*

(86) International application number:
**PCT/JP2019/019381**

(87) International publication number:
**WO 2019/239781 (19.12.2019 Gazette 2019/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.06.2018 JP 2018112202**

(71) Applicant: **Kureha Corporation**
**Chuo-ku**
**Tokyo 103-8552 (JP)**

(72) Inventors:
- **AOKI, Kenta**
  **Tokyo 103-8552 (JP)**
- **ASHIDA, Kana**
  **Tokyo 103-8552 (JP)**
- **KOBAYASHI, Shota**
  **Tokyo 103-8552 (JP)**
- **SAKAKIBARA, Yukitaro**
  **Tokyo 103-8552 (JP)**

(74) Representative: **Zimmermann & Partner Patentanwälte mbB**
**Postfach 330 920**
**80069 München (DE)**

(54) **BINDER COMPOSITION, ELECTRODE MIXTURE, ELECTRODE STRUCTURE, METHOD FOR MANUFACTURING ELECTRODE STRUCTURE, AND SECONDARY CELL**

(57) Provided is a binder composition that can suppress change in solid content concentration of an electrode mixture slurry in a lower part of a container. The binder composition according to an embodiment of the present invention contains a first vinylidene fluoride polymer, the first vinylidene fluoride polymer containing a constituent unit derived from vinylidene fluoride and a constituent unit derived from a monomer represented by Formula (1) below.

[Chem. 1]

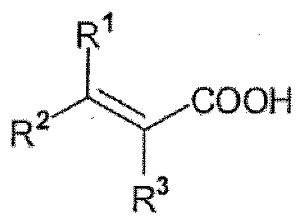

· · · (1)

In the formula, any one of $R^1$, $R^2$, and $R^3$ is a fluorine atom or a fluorine-substituted alkyl group having from 1 to 6 carbon atoms, and the rest is a hydrogen atom or an alkyl group having from 1 to 6 carbon atoms.

EP 3 809 500 A1

## Description

### [TECHNICAL FIELD]

The present invention relates to a binder composition and particularly relates to a binder composition for a lithium-ion secondary battery.

### [BACKGROUND ART]

In recent years, there have been remarkable developments in electronic technology, and the functionality of miniature mobile devices has become increasingly advanced. There is a demand for the power supplies used in these devices to be smaller and lighter (to have higher energy density). As batteries having high energy density, non-aqueous electrolyte secondary batteries such as lithium-ion secondary batteries are widely used.

An electrode of a lithium-ion secondary battery can be obtained by, for example, applying onto a current collector an electrode mixture in the form of a slurry (hereinafter, also referred to as an electrode mixture slurry) obtained by mixing powdery electrode materials such as an electrode active material and a conductive auxiliary, which is added as necessary, with a binder (binding agent) and dissolving or dispersing the mixed material in a suitable solvent, and volatilizing the solvent to form a structure in which an electrode mixture layer is retained.

As a technique to impart a high energy density in a lithium-ion secondary battery, a technique to achieve a high charge/discharge capacity of a battery having a limited volume by increasing an electrode density in an electrode has been used. As a technique to increase an electrode density, fixation of an electrode active material on a current collector foil with a small amount of binder used has been known.

However, to reduce the amount of the binder used, the binder is required to have high flexibility that does not cause electrode breakage even when the electrode density is increased.

Thus, binders having high flexibility have been developed. As an example of such a binder, use of a vinylidene fluoride-hexafluoropropylene copolymer or a vinylidene fluoride-chlorotrifluoroethylene copolymer has been known (Patent Document 1).

### [Citation List]

### [Patent Document]

Patent Document 1: JP 2002-313345 A

### [SUMMARY OF INVENTION]

### [Technical Problem]

However, it was found that, for an electrode mixture prepared by using a binder containing a vinylidene fluoride-hexafluoropropylene copolymer described in Patent Document 1, during storage period of the electrode mixture slurry in a container, solid content such as the electrode active material is sedimented and the solid content concentration in a lower part of the container is thus increased, and thickening of the electrode mixture slurry occurs in the lower part of the container. As a result, there is a problem that handleability is decreased during electrode production using the electrode mixture slurry.

Furthermore, in Patent Document 1, the vinylidene fluoride-chlorotrifluoroethylene copolymer contains a chlorine atom. A chlorine compound is chemically stable but has a large load on the environment, such as generation of dioxin, when appropriate treatment is not performed. Thus, in recent years, material design containing no chlorine atom has been demanded in various industries, and chlorine atom-free materials are demanded in lithium-ion secondary batteries as well.

Therefore, the present invention was completed in light of the problems described above, and an object of the present invention is to provide a novel binder composition that can be used to produce an electrode mixture in which increase of a solid content concentration in a lower part of a container during storage of an electrode mixture slurry is suppressed, that is, change in the solid content concentration is suppressed.

### [Solution to Problem]

To solve the problems described above, the binder composition according to an embodiment of the present invention is a binder composition used to bind an electrode active material to a current collector and contains a first

vinylidene fluoride polymer, the first vinylidene fluoride polymer containing a constituent unit derived from vinylidene fluoride and a constituent unit derived from a monomer represented by Formula (1) below.

[Chem. 1]

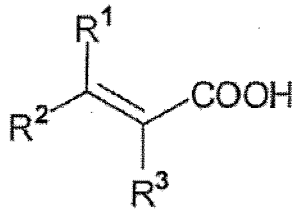

・・・ (1)

In the formula, any one of $R^1$, $R^2$, and $R^3$ is a fluorine atom or a fluorine-substituted alkyl group having from 1 to 6 carbon atoms.

**[Advantageous Effects of Invention]**

According to the electrode mixture of an embodiment of the present invention, a binder composition that can suppress change in solid content concentration in a lower part of a container during storage of an electrode mixture slurry can be provided.

**[BRIEF DESCRIPTION OF THE DRAWINGS]**

FIG. 1 is a cross-sectional view of an electrode structure according to an embodiment of the present invention.
FIG. 2 is an exploded perspective view of a secondary battery according to an embodiment of the present invention.

**[DESCRIPTION OF EMBODIMENTS]**

A binder composition according to an embodiment of the present invention and the use thereof will be described.

Binder composition

The binder composition according to the present embodiment is a composition used to bind an electrode active material to a current collector in an electrode obtained by forming an electrode mixture layer containing the electrode active material on the current collector. The binder composition according to the present embodiment contains a first vinylidene fluoride polymer. The first vinylidene fluoride polymer according to the present embodiment contains a constituent unit derived from vinylidene fluoride and a constituent unit derived from a monomer represented by Formula (1) below.

[Chem. 2]

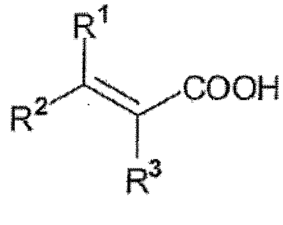

・・・ (1)

In Formula (1), any one of $R^1$, $R^2$, and $R^3$ is a fluorine atom or a fluorine-substituted alkyl group having from 1 to 6 carbon atoms, and the rest is a hydrogen atom or an alkyl group having from 1 to 6 carbon atoms. In the present

specification, the "fluorine-substituted alkyl group" refers to a group in which at least one hydrogen atom in the alkyl group is substituted with a fluorine atom. Any one of $R^1$, $R^2$, and $R^3$ has only to be a fluorine atom or a fluorine-substituted alkyl group having from 1 to 6 carbon atoms; however, $R^3$ is preferably a fluorine atom or a fluorine-substituted alkyl group having from 1 to 6 carbon atoms. In a case where $R^3$ is a fluorine atom or a fluorine-substituted alkyl group having from 1 to 6 carbon atoms, $R^1$ and $R^2$ are desirably each a hydrogen atom or an alkyl group having from 1 to 6 carbon atoms, and from the perspective of polymerization reaction, $R^1$ and $R^2$ are desirably substituents having small steric hindrance, preferably each hydrogen or an alkyl group having from 1 to 3 carbons, and more preferably hydrogen or a methyl group. Furthermore, any one of $R^1$, $R^2$, and $R^3$ has only to be a fluorine atom or a fluorine-substituted alkyl group having from 1 to 6 carbon atoms, and is more preferably a fluorine-substituted alkyl group having from 1 to 3 carbon atoms, even more preferably a fluorine-substituted alkyl group having one carbon atom, and particularly preferably a trifluoromethyl group.

The first vinylidene fluoride polymer in the present embodiment preferably contains 0.01 mol% or greater, and more preferably 0.10 mol% or greater, of constituent unit derived from the monomer represented by Formula (1). The upper limit of the content of the constituent unit derived from the monomer represented by Formula (1) is preferably 10 mol% or less, more preferably 5.0 mol% or less, even more preferably 1.0 mol% or less, and particularly preferably 0.50 mol% or less. Furthermore, preferably from 90 to 99.99 mol%, more preferably from 95 to 99.90 mol%, even more preferably from 99.00 to 99.90 mol%, and particularly preferably from 99.50 to 99.90 mol%, of the constituent units derived from vinylidene fluoride are contained. By setting the constituent unit derived from the monomer represented by Formula (1) to the range described above, retention ability of an electrode active material is enhanced, and, during storage of an electrode mixture slurry using the binder composition according to the present embodiment, change in solid content concentration of the electrode mixture slurry in a lower part of a container can be suppressed. Furthermore, in an electrode structure produced by using an electrode mixture containing the binder composition according to the present embodiment, breakage of an electrode when the electrode is bent can be suppressed.

Note that the amount of the vinylidene fluoride unit of the first vinylidene fluoride polymer and the amount of the constituent unit derived from the monomer represented by Formula (1) can be determined by $^1H$ NMR spectrum or $^{19}F$ NMR spectrum of a copolymer, or by neutralization titration.

The first vinylidene fluoride polymer in the present embodiment may also include components of monomers other than vinylidene fluoride and the monomer represented by Formula (1) above. Examples of such other monomers include a fluorine-based monomer copolymerizable with vinylidene fluoride, a hydrocarbon-based monomer such as ethylene and propylene, an alkyl (meth)acrylate compound typified by (meth)acrylic acid and methyl (meth)acrylate, and an unsaturated carboxylic acid derivative represented by Formula (2) below.

[Chem. 3]

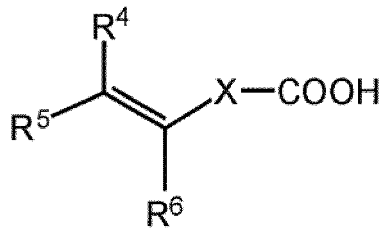

· · · (2)

In Formula (2), $R^4$ is a hydrogen atom, an alkyl group having from 1 to 5 carbon atoms, or a carboxyl group substituted with an alkyl group having from 1 to 5 carbon atoms, and $R^5$ and $R^6$ are each independently a hydrogen atom or an alkyl group having from 1 to 5 carbon atoms. From the perspective of polymerization reaction, particularly, $R^4$ and $R^5$ are desirably substituents having small steric hindrance, preferably a hydrogen or an alkyl group having from 1 to 3 carbon atoms, and more preferably a hydrogen or a methyl group.

In Formula (2), X is a single bond or an atomic group including 1 to 20 atoms in its main chain and having a molecular weight of 500 or less. The molecular weight of the atomic group is preferably 200 or less. Although the lower limit of the molecular weight of the atomic group is not particularly limited, it is normally about 15. By setting the molecular weight of the atomic group to the range described above, gelling of the electrode mixture slurry can be appropriately suppressed. Note that the "number of atoms in the main chain" means the number of atoms of a backbone moiety in a chain, in which a carboxyl group described on the right of X in Formula (2) and a group ($R^4R^5C=CR^6$-) described on the left of X are connected via a minimum number of atoms. X may also be branched by including a functional group as a

side chain. X may have one side chain or a plurality of side chains. Note that, in a case where X is a single bond, the compound of Formula (2) has a structure in which the carboxyl group directly bonds to a carbon atom bonded to $R^6$.

Furthermore, X in Formula (2) is preferably a structure represented by Formula (3) below.

-COO-X'-... (3)

In Formula (3), X' is an atomic group having a molecular weight of 456 or less in which the main chain has from 1 to 18 atoms; however, from the perspective of polymerizability, an atomic group in which the main chain has from 1 to 13 atoms is preferable, and an atomic group in which the main chain has from 1 to 8 atoms is more preferable. The molecular weight of the atomic group represented by X' is preferably 156 or lower. Although the lower limit of the molecular weight of the atomic group represented by X' is not particularly limited, it is normally about 14. The number of atoms in the main chain does not include the number of hydrogen atoms.

Examples of fluorine-based monomers that are copolymerizable with vinylidene fluoride include vinyl fluoride, trifluoroethylene, tetrafluoroethylene, chlorotrifluoroethylene, hexafluoropropylene, perfluoroalkyl vinyl ethers typified by perfluoromethyl vinyl ether, and the like.

Examples of the unsaturated carboxylic acid derivative represented by Formula (2) include 2-carboxyethyl acrylate, 2-carboxyethyl methacrylate, monomethyl maleate, acryloyloxyethyl succinic acid, and acryloyloxypropyl succinic acid.

In a case where the first vinylidene fluoride polymer in the present embodiment has a constituent unit derived from another monomer, the other monomer is preferably an unsaturated carboxylic acid derivative represented by Formula (2), and more preferably acryloyloxypropyl succinic acid. Furthermore, in a case where the first vinylidene fluoride polymer in the present embodiment has a constituent unit derived from the other monomer described above, from 0.10 to 3.0 mol% of the constituent units are preferably contained.

The first vinylidene fluoride polymer in the present embodiment can be obtained by polymerizing vinylidene fluoride and the monomer represented by Formula (1) by a known method. The polymerization method is not particularly limited, and examples thereof include suspension polymerization, emulsion polymerization, and solution polymerization. Among these, from the perspective of ease of post-treatment and the like, the polymerization method is preferably a suspension polymerization or emulsion polymerization in a water-based system. In addition, the vinylidene fluoride and the monomer represented by Formula (1) used in polymerization are each a known compound, and common commercially available products may be used.

The first vinylidene fluoride polymer in the present embodiment has a weight average molecular weight measured by gel permeation chromatography (GPC) from 50000 to 1500000.

The inherent viscosity $\eta_i$ of the first vinylidene fluoride polymer of the present embodiment is preferably from 0.5 dL/g to 5.0 dL/g, more preferably from 1.0 dL/g to 4.0 dL/g, and even more preferably from 1.5 dL/g to 3.5 dL/g. The inherent viscosity is preferably in this range so that electrodes can be easily produced without occurrence of productivity deterioration due to a reduction in the electrode mixture slurry solids, and without occurrence of thickness unevenness of the electrode when the electrode mixture slurry is applied. The inherent viscosity $\eta_i$ may be determined by dissolving 80 mg of a polymer in 20 mL of N,N-dimethylformamide, and using an Ubbelohde viscometer in a 30°C thermostatic bath, and calculating with Formula below:

$$\eta_i = (1/C) \cdot \ln(\eta/\eta_0)$$

Here, $\eta$ is the viscosity of the polymer solution, no is the viscosity of N,N-dimethylformamide (solvent), and C is 0.4 g/dL.

The binder composition according to the present embodiment may contain a second vinylidene fluoride polymer as long as the required effects are not impaired. Examples of the second vinylidene fluoride polymer that can be contained in the binder composition include vinylidene fluoride homopolymers and vinylidene fluoride polymers containing a constituent unit derived from vinylidene fluoride and a constituent unit derived from an unsaturated carboxylic acid-based monomer. Examples of the unsaturated carboxylic acid-based monomer include alkyl acrylate compounds typified by methyl acrylate, and unsaturated carboxylic acid derivatives represented by Formula (2). In a case where the binder composition of the present embodiment contains a vinylidene fluoride polymer containing a constituent unit derived from vinylidene fluoride and a constituent unit derived from an unsaturated carboxylic acid-based monomer, the unsaturated carboxylic acid-based monomer is preferably an unsaturated carboxylic acid derivative represented by Formula (2), and more preferably acryloyloxypropyl succinic acid.

In a case where the second vinylidene fluoride polymer is contained, the proportion of the first vinylidene fluoride polymer in the entire polymer contained in the binder composition is preferably 10 wt.% or greater, and more preferably

20 wt.% or greater. Furthermore, the content of the constituent unit derived from the monomer represented by Formula (1) in the entire polymers contained in the binder composition is preferably 0.01 mol% or greater, more preferably 0.1 mol% or greater, and even more preferably 0.3 mol% or greater. By setting the content of the first vinylidene fluoride polymer in the binder composition and the content of the constituent unit derived from the monomer represented by Formula (1) in the binder composition to the ranges described above, during storage of an electrode mixture slurry using the binder composition according to the present embodiment, effect of suppressing change in solid content concentration of the electrode mixture slurry in a lower part of a container can be achieved. Furthermore, in an electrode structure produced by using an electrode mixture containing the binder composition according to the present embodiment, breakage of an electrode when the electrode is bent can be suppressed.

Furthermore, the binder composition according to the present embodiment is also developed in a manner that breakage of an electrode when the electrode is bent can be suppressed in the electrode structure finally obtained even when a polymer containing no chlorine atom is used, taking environmental damage into consideration. Thus, it is desirable that the amount of chlorine in the binder composition according to the present embodiment is low, and specifically, the amount is preferably 1000 ppm or less, more preferably 500 ppm or less, and particularly preferably 300 ppm or less.

The amount of chlorine in the binder composition can be measured by, for example, X-ray fluorescence analysis, combustion ion chromatography, or ICP emission spectrometry.

As described above, the binder composition of the present embodiment reduces environmental damage because a vinylidene fluoride polymer containing no chlorine atom is used. Furthermore, according to the electrode mixture obtained by using the binder composition of the present embodiment, change in solid content concentration during storage period can be suppressed. By suppressing change in solid content concentration of the electrode mixture slurry in a lower part of a container during storage period, thickening of the electrode mixture slurry can be prevented. As a result, deterioration of handleability during production of the electrode structure can be prevented. Furthermore, in an electrode structure produced by using an electrode mixture containing the binder composition according to the present embodiment, breakage of an electrode when the electrode is bent can be suppressed. Note that change in concentration of the solid content of the electrode mixture slurry in a lower part of a container when the electrode mixture slurry is stored for a certain period of time can be evaluated by a ratio of a solid content concentration of the electrode mixture slurry before the storage to a solid content concentration of the electrode mixture slurry sampled from a lower part of a predetermined container after the electrode mixture slurry is stored at a certain period of time in the container.

## Electrode mixture

The electrode mixture according to the present embodiment contains the binder composition according to the present embodiment and an electrode active material.

## Electrode active material

The electrode active material used in the present embodiment contains a lithium metal oxide. Note that in the present embodiment, the electrode active material may also include, for example, impurities and additives in addition to the lithium metal oxide. Moreover, the types of impurities, additives and the like included in the electrode active material are not particularly limited.

Examples of the lithium metal oxide include lithium metal oxides represented by Formula (4) below.

$$LiMO_2 \ldots \quad (4)$$

In Formula (4) above, M is preferably at least one selected from the group consisting of Ni, Co, Al, Fe, Mn, Cr, and V; M is more preferably Ni, Co, or Al, and M more preferably includes one or more selected from the group consisting of Co, Mn, and Al in addition to Ni. The inclusion of Ni in the lithium metal oxide is preferable in that the capacity of the secondary battery can be enhanced by increasing the capacitance density. Furthermore, the inclusion of Co and the like in the lithium metal oxide in addition to Ni is preferable because changes in the crystal structure during the charging and discharging process are prevented, thereby stable cycle characteristics are exhibited.

Preferable examples of such a lithium metal oxide include $LiCoO_2$ and $LiNiO_2$.

Examples of particularly preferred lithium metal oxide include binary lithium metal oxides represented by Formula (5) below:

$$LiNi_xN1_yO_2 \ldots \quad (5)$$

(in the formula, N1 represents Co or Mn, where relations of $0 < x \leq 1$ and $0 < y \leq 1$ are satisfied), ternary lithium metal oxides represented by Formula (6) below:

$LiNi_xCo_yN2_zO_2$ ... (6)

(in the formula, N2 represents Mn or Al, where relations of $0 < x \leq 1$, $0 < y \leq 1$, $0 < z \leq 1$ are satisfied), and spinel type $LiMn_2O_4$.

With the lithium metal oxide represented by Formula (5) or (6) above, when the total number of elements constituted by Ni and N1, or Ni, Co and N2 is considered to be 100 mol%, the proportion of Ni is preferably 30 mol% or greater.

A ternary lithium metal oxide has a high charging potential and excellent cycle characteristics, and thus a ternary lithium metal oxide is particularly preferably used as the electrode active material in the present embodiment.

The composition of the binary lithium metal oxide is not particularly limited, and examples of the composition thereof include $Li_{1.0}Ni_{0.8}Co_{0.2}O_2$ and $Li_{1.0}Ni_{0.5}Mn_{0.5}O_2$.

Furthermore, the composition of the ternary lithium metal oxide used in the present embodiment is not particularly limited, and examples of the composition thereof include $Li_{1.00}Ni_{0.35}Co_{0.34}Mn_{0.34}O_2$ (NCM111), $Li_{1.00}Ni_{0.52}Co_{0.20}Mn_{0.30}O_2$ (NCM523), $Li_{1.00}Ni_{0.50}Co_{0.30}Mn_{0.20}O_2$ (NCM532), $Li_{1.00}Ni_{0.6}Co_{0.2}Mn_{0.2}O_2$ (NCM622), $Li_{1.00}Ni_{0.83}Co_{0.12}Mn_{0.05}O_2$ (NCM811), and $Li_{1.00}Ni_{0.85}Co_{0.15}Al_{0.05}O_2$ (NCA811).

Furthermore, the electrode active material may include a plurality of different types of lithium metal oxides, and for example, may include a plurality of $LiNi_xCo_yMn_zO_2$ of different compositions, or may include $LiNi_xCo_yMn_zO_2$ and $LiNi_xCo_yAl_zO_2$.

Solvent

The electrode mixture of the present embodiment may include a solvent. The solvent can be water or a non-aqueous solvent. Examples of the non-aqueous solvent include N-methyl-2-pyrrolidone (NMP), N,N-dimethylformamide, N,N-dimethylacetamide, dimethyl sulfoxide, N,N-dimethyl sulfoxide, hexamethylphosphoramide, dioxane, tetrahydrofuran, tetramethylurea, triethyl phosphate, trimethyl phosphate, acetone, cyclohexane, methyl ethyl ketone, and tetrahydrofuran. One or more types of these solvents may be included in the electrode mixture. The solvent may be added to the binder composition or may be added separately from the binder composition.

Other components

The electrode mixture of the present embodiment may include other components as necessary. Examples of the other components include a conductive auxiliary and a pigment dispersant.

The conductive auxiliary is added for the purpose of improving the conductivity of the electrode mixture layer formed with the electrode mixture. Examples of the conductive auxiliary include graphites such as natural graphite (scaly graphite, etc.), artificial graphite, fine graphite powder, and graphite fiber; carbon blacks such as acetylene black, Ketjen black, channel black, and furnace black; and carbon materials such as carbon fibers and carbon nanotubes. Other examples include conductive fibers such as metal fibers of Ni, Al and the like; metal powders; conductive metal oxides; and organic conductive materials.

In addition, examples of the pigment dispersant include polyvinylpyrrolidone.

In the present embodiment, the content of such other component described above is from 0 to 10 parts by weight, and preferably from 0 to 5 parts by weight, per 100 parts by weight of the electrode mixture.

Method for producing electrode mixture

Next, a method for producing the electrode mixture of the present embodiment will be described. The method for producing the electrode mixture of the present embodiment includes kneading the first vinylidene fluoride polymer and the lithium metal oxide described above. In the method for producing an electrode mixture of the present embodiment, solvents and other components may be kneaded as necessary, and the method is not particularly limited. Furthermore, the order in which the various components are added when kneading is not particularly limited. Moreover, in a case where the solvent is added, the electrode active material and the solvent may be stirred and mixed in advance, and then the first vinylidene fluoride polymer may be added. Furthermore, in a case where the second vinylidene fluoride polymer is contained, the second vinylidene fluoride polymer may be added separately from the first vinylidene fluoride polymer, or a polymer solution containing both the first vinylidene fluoride polymer and the second vinylidene fluoride polymer may be prepared in advance, and then the polymer solution may be added to the electrode active material.

Electrode structure

Next, an embodiment of an electrode structure formed with the electrode mixture of an embodiment of the

present invention will be described with reference to FIG. 1. FIG. 1 is a cross-sectional view of an electrode structure according to an embodiment of the present invention.

As illustrated in FIG. 1, an electrode structure 10 includes a current collector 11, and electrode mixture layers 12a and 12b.

The current collector 11 is a substrate of the electrode structure 10 and is a terminal for producing electricity. Examples of materials for the current collector 11 include iron, stainless steel, steel, aluminum, nickel, and titanium. The shape of the current collector 11 is preferably a foil or a mesh. In the present embodiment, the current collector 11 is preferably an aluminum foil.

The thickness of the current collector 11 is preferably from 5 to 100 μm, and preferably from 5 to 20 μm.

The electrode mixture layers 12a and 12b are layers formed with the electrode mixture of the present embodiment. The thickness of the electrode mixture layers 12a and 12b is from 10 μm to 1000 μm, more preferably from 20 to 250 μm, and even more preferably from 20 to 150 μm.

Note that the electrode structure 10 includes the electrode mixture layers 12a, 12b formed on the upper and lower surfaces of the current collector 11 as illustrated in FIG. 1, but the electrode structure 10 is not limited thereto, and may be an electrode structure in which an electrode mixture layer is formed on only one side of the current collector 11, that is, an electrode structure in which any one of the electrode mixture layers 12a and 12b is formed.

The electrode structure 10 can be used, for example, as a positive electrode of a lithium secondary battery.

Next, a method of producing an electrode structure will be described.

The electrode structure 10 of the present embodiment can be obtained by applying an electrode mixture in a slurry state (electrode mixture slurry) containing a binder composition, a lithium metal oxide, and a solvent, onto a surface of the current collector 11 and drying it to form a coating film on the surface of the current collector 11, and heat-treating the coating film.

A known method can be used as the method for applying the electrode mixture slurry, and examples include methods that use a bar coater, a die coater, or a comma coater.

The drying temperature when drying the electrode mixture slurry applied to the upper and lower surfaces of the current collector 11 can be from 50 to 170°C, and preferably from 50 to 150°C.

Note that in the present embodiment, a method of forming the electrode mixture layer by applying the electrode mixture slurry onto the upper and lower surfaces of the current collector 11 was described. However, the method of producing the electrode structure of the present embodiment is not limited thereto, and the electrode mixture may be applied to at least one side of the current collector.

Secondary battery

The secondary battery of the present embodiment is a non-aqueous electrolyte secondary battery including the electrode structure of the present embodiment. The secondary battery of the present embodiment will be described with reference to FIG. 2. FIG. 2 is an exploded perspective view of a secondary battery according to the present embodiment.

As illustrated in FIG. 2, a secondary battery 100 has a structure in which an electricity-generating element, obtained by disposing and stacking a separator 3 between a positive electrode 1 and a negative electrode 2, and then winding the laminate structure into a spiral shape, is housed in a metal casing 5. The positive electrode 1 corresponds to the electrode structure 10 of FIG. 1.

A known material such as a porous film of a polymeric material such as polypropylene or polyethylene may be used as the separator 3. In addition, as the members used in the secondary battery 100, those members which are ordinarily used in the present field can be used as appropriate.

The secondary battery 100 is a cylindrical battery, but of course the secondary battery 100 of an embodiment of the present invention is not limited thereto, and for example, may be a secondary battery having another shape such as a coin shape, a square shape, or a paper shape.

[Summary]

As described above, the binder composition according to an embodiment of the present invention is a binder composition that is used for binding an electrode active material to a current collector, the binder composition containing a first vinylidene fluoride polymer, the first vinylidene fluoride polymer containing a constituent unit derived from vinylidene fluoride and a constituent unit derived from the monomer represented by Formula (1) above.

Furthermore, in the binder composition according to an embodiment of the present invention, the first vinylidene fluoride polymer preferably further contains a constituent unit derived from the monomer represented by Formula (2) above.

Furthermore, in the binder composition according to an embodiment of the present invention, in the monomer

represented by Formula (1) above, $R^1$ and $R^2$ are each preferably a hydrogen atom or an alkyl group having from 1 to 6 carbon atoms, and $R^3$ is preferably a fluorine atom or a fluorine-substituted alkyl group having from 1 to 6 carbon atoms.

Furthermore, in the binder composition according to an embodiment of the present invention, the binder composition preferably further contains a second vinylidene fluoride polymer that is different from the first vinylidene fluoride polymer, and the second vinylidene fluoride polymer preferably contains a vinylidene fluoride homopolymer or a constituent unit derived from vinylidene fluoride and a constituent unit derived from an unsaturated carboxylic acid-based monomer.

Furthermore, in the binder composition according to an embodiment of the present invention, a chlorine amount in the binder composition is preferably 1000 ppm or less.

The electrode mixture according to an embodiment of the present invention contains the binder composition described above and an electrode active material.

The electrode mixture of the present invention preferably contains a solvent.

The electrode structure of the present invention includes a current collector and an electrode mixture layer provided on the current collector, and the electrode mixture layer is a layer formed with the electrode mixture described above.

The method of producing an electrode structure according to an embodiment of the present invention includes coating a surface of a current collector with the electrode mixture described above and drying to form a coating film on the surface of the current collector, and heat-treating the coating film.

The secondary battery according to an embodiment of the present invention includes the electrode structure described above.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

**[Examples]**

As described below, using various binder compositions, electrode mixtures and electrode structures were produced, and confirmation tests for electrode density at break of each electrode structure and change in solid content concentration were performed. Prior to the descriptions of the specific examples, methods of measuring the electrode density at break and testing change in the solid content concentration are described.

Measurement of solid content concentration change

Carbon black was added as a conductive auxiliary to the electrode active material, and powder mixing was performed. Meanwhile, a vinylidene fluoride polymer was dissolved in N-methyl-2-pyrrolidone (hereinafter, NMP) to produce a vinylidene fluoride solution having a concentration of 6 wt.%. The vinylidene fluoride solution was added in two portions to the mixture of the electrode active material and carbon black and kneaded. Specifically, the vinylidene fluoride solution was added in a manner that the solid content concentration was 84 wt.%, and primary kneading was performed at 2000 rpm for 2 minutes. Then, the solid content concentration was set to 72 wt.% by adding the rest of the vinylidene fluoride solution, and secondary kneading was performed at 2000 rpm for 3 minutes, and thus an electrode mixture slurry was obtained. The weight ratio of the electrode active material, the carbon black, and the vinylidene fluoride polymer in the obtained electrode mixture slurry is 100:2:1 in this order.

The produced electrode mixture slurry was poured into a polypropylene tube ($\varphi 12 \times 75$ mm) until a height of 5 cm from the bottom of the tube, and stored in an environment of 25°C, 20% RH for 96 hours. After storage, the electrode mixture slurry was sampled from the bottom portion of the tube up to a height of 1 cm, weighed into an aluminum cup, and the weight of the collected electrode mixture slurry was measured. The aluminum cup was heated at 110°C for 2 hours to remove the solvent, and then weighed to measure the solid content of the sampled electrode mixture slurry. The lower part solid content concentration ($NV_A$) was calculated from the weight before and after drying. The ratio ($NV_A/NV_B$) of the lower part solid content concentration ($NV_A$) to the initial solid content concentration ($NV_B$) of the charged electrode mixture slurry was calculated as an index value. A larger value of $NV_A/NV_B$ indicates that the electrode active material is easier to sink and accumulate in the lower part of the container during storage.

Measurement of electrode density at break

Carbon black was added as a conductive auxiliary to the electrode active material, and powder mixing was

performed. Meanwhile, a vinylidene fluoride polymer was dissolved in N-methyl-2-pyrrolidone (hereinafter, NMP) to produce a vinylidene fluoride solution having a concentration of 6 wt.%. The vinylidene fluoride solution was added in two portions to the mixture of the electrode active material and carbon black and kneaded. Specifically, the vinylidene fluoride solution was added in a manner that the solid content concentration was 85 wt.%, and primary kneading was performed at 2000 rpm for 2 minutes. Then, the solid content concentration was set to 75 wt.% by adding the rest of the vinylidene fluoride solution, and secondary kneading was performed at 2000 rpm for 3 minutes, and thus an electrode mixture slurry was obtained. The weight ratio of the electrode active material, the carbon black, and the vinylidene fluoride polymer in the obtained electrode mixture slurry is 100:2:1.5 in this order.

The obtained electrode mixture slurry was applied to both faces of an aluminum current collector foil with a thickness of 15 $\mu$m using a bar coater, and heated and dried at 110°C for 30 minutes and at 130°C for 2 hours to produce an electrode structure with an areal weight of electrode mixture in a dry state of approximately 270 $g/m^2$. The electrode structure was cut into a size of 2 cm $\times$ 5 cm using a razor, adjusted to have a predetermined electrode density by pressing using a roll press, and thus a pressed electrode was produced. The pressed electrodes were produced to have a range of electrode density of 2.5 to 5.0 $g/cm^3$ with an interval of 0.05 $g/cm^3$. Both ends of each of the produced pressed electrode were connected by a double-sided adhesive tape to form a cylindrical shape, and the cylindrical pressed electrode was fixed on a cutting board in a manner that the loop opening is arranged laterally. With an upper end of the fixed electrode loop, a 2 kg weight was brought into contact, and the weight was allowed to fall freely from the position of the contact to flatten the pressed electrode. The flattened pressed electrode was opened, the breakage condition was visually observed by shining a flashlight at the bent part. The case where the bent part has one or more parts where light is transmitted was evaluated as the electrode being broken. Test was performed for pressed electrodes in ascending order of electrode density, and the electrode density at which the first breakage occurred was taken as the electrode density at break. A higher electrode density at break indicates less occurrence of electrode breakage even with a higher electrode density and indicates a higher flexibility.

Amounts of constituent units of vinylidene fluoride and comonomer

The $^1$H NMR spectrum and the $^{19}$F NMR spectrum of the polymer powder were determined under the following conditions.

Instrument: AVANCE AC 400FT NMR spectrometer available from Bruker Corp.

Measurement conditions

Frequency: 400 MHz
Measurement solvent: DMSO-d6
Measurement temperature: 25°C

The amount of constituent units derived from the vinylidene fluoride of the polymer, and the amount of constituent units derived from the comonomer were calculated from the $^1$H NMR spectrum. Specifically, the amounts of the constituent units were calculated on the basis of an integrated intensity of a signal derived mainly from the comonomer and signals at 2.24 ppm and 2.87 ppm derived mainly from vinylidene fluoride.

In a case where a comonomer having fluorine was used as the comonomer, the amount of constituent units derived from the vinylidene fluoride of the polymer, and the amount of constituent units derived from the comonomer were calculated from the $^{19}$F NMR spectrum. Specifically, the amounts of the constituent units were calculated on the basis of an integrated intensity of a signal derived mainly from the comonomer and signals observed around -91.40 to -94.00 ppm and 113.50 ppm and 115.50 ppm derived mainly from vinylidene fluoride.

In a case where a comonomer having a structure derived from acrylic acid is used as the comonomer, the amount of constituent units including structure derived from acrylic acid of the polymer was determined by neutralization titration using 0.03 mol/L of a sodium hydroxide aqueous solution. More specifically, a solution to be titrated was prepared by dissolving 0.3 g of the polymer in 9.7 g of acetone at approximately 80°C and then adding 3 g of pure water. Phenolphthalein was used as an indicator, and neutralization titration was performed at room temperature using a 0.03 mol/L sodium hydroxide aqueous solution.

Measurement of chlorine content

The chlorine concentration was determined in accordance with JIS K 7229 by burning the binder composition under an oxygen atmosphere in a flask, absorbing the generated combustion gas by an absorption liquid, subjecting

the liquid to an ion chromatograph, and calculating the chlorine concentration by the calibration curve method.

[Example 1]

Preparation of binder composition

The vinylidene fluoride polymer A (VDF/TFMA) was prepared as follows. In an autoclave with an internal volume of 2 liters, 1248 g of ion-exchanged water, 0.4 g of Metolose 90SH-100 (available from Shin-Etsu Chemical Co., Ltd.), 2.2 g of a 50 wt.% diisopropyl peroxydicarbonate-freon 225cb solution, 0.4 g of 2-(trifluoromethyl)acrylic acid (TFMA), and 400 g of vinylidene fluoride (VDF) were charged, and the temperature was increased to 45°C over a period of 2 hours. Subsequently, a 5 wt.% 2-(trifluoromethyl)acrylic acid aqueous solution was gradually added at a rate of 0.6 g/min while the temperature was maintained at 45°C. 72 g of the 5 wt.% 2-(trifluoromethyl)acrylic acid aqueous solution was added. Polymerization was performed for a total of 3.5 hours from the start of heating. After polymerization was completed, the polymer slurry was heat-treated for 60 minutes at 95°C. The polymer slurry was then dehydrated, washed with water, and further dried at 80°C for 20 hours to obtain a vinylidene fluoride polymer A (VDF/TFMA).

Preparation of electrode mixture

An electrode mixture was prepared by using the vinylidene fluoride polymer A (VDF/TFMA) obtained as the vinylidene fluoride polymer in the preparation method of the electrode mixture in "Measuremeng of solid content concentration change" described above, a lithium-cobalt composite oxide $LiCoO_2$ (LCO; CELLSEED C10N, available from Nippon Chemical Industrial Co., Ltd., average particle size: 10 μm) as an electrode active material, and carbon black (Super-P; available from Timcal Japan, average particle size: 40 nm, specific surface area: 60 $m^2/g$) as a conductive auxiliary.

Production of electrode structure

An electrode structure was prepared by using the vinylidene fluoride polymer A (VDF/TFMA) obtained as the vinylidene fluoride polymer in the preparation method of the electrode structure in "Measurement of electrode density at break" described above and LCO as an electrode active material.

Measurement of solid content concentration change and electrode density at break

With respect to the electrode mixture prepared by using the obtained vinylidene fluoride polymer A (VDF/TFMA) and LCO as the active material, solid content concentration change of the slurry and the electrode density at break were measured. The results are shown in Table 1.

[Example 2]

An electrode mixture was prepared in the same manner as in Example 1 except for changing the vinylidene fluoride polymer A (VDF/TFMA) to a vinylidene fluoride polymer B (VDF/TFMA), and an electrode structure was prepared.
The vinylidene fluoride polymer B (VDF/TFMA) was prepared as follows. In an autoclave with an internal volume of 2 liters, 1137 g of ion-exchanged water, 0.4 g of Metolose 90SH-100 (available from Shin-Etsu Chemical Co., Ltd.), 2.4 g of a 50 wt.% diisopropyl peroxydicarbonate-freon 225cb solution, 0.8 g of 2-(trifluoromethyl)acrylic acid, and 400 g of vinylidene fluoride were charged, and the temperature was increased to 45°C over a period of 2 hours. Subsequently, a 5 wt.% 2-(trifluoromethyl)acrylic acid aqueous solution was gradually added at a rate of 1.2 g/min while the temperature was maintained at 45°C. 144.0 g of the 5 wt.% 2-(trifluoromethyl)acrylic acid aqueous solution was added. Polymerization was performed for a total of 4 hours from the start of heating. After polymerization was completed, the polymer slurry was heat-treated for 60 minutes at 95°C. The polymer slurry was then dehydrated, washed with water, and further dried at 80°C for 20 hours to obtain a vinylidene fluoride polymer B (VDF/TFMA).
With respect to the obtained electrode mixture, solid content concentration change of the slurry and the electrode density at break were measured. The results are shown in Table 1.

[Example 3]

An electrode mixture was prepared in the same manner as in Example 1 except for changing the vinylidene fluoride polymer A (VDF/TFMA) to a vinylidene fluoride polymer C (VDF/TFMA), and an electrode structure was prepared.
The vinylidene fluoride polymer C (VDF/TFMA) was prepared as follows. In an autoclave with an internal volume

of 2 liters, 1144 g of ion-exchanged water, 0.4 g of Metolose 90SH-100 (available from Shin-Etsu Chemical Co., Ltd.), 2 g of a 50 wt.% diisopropyl peroxydicarbonate-freon 225cb solution, 2 g of 2-(trifluoromethyl)acrylic acid, and 400 g of vinylidene fluoride were charged, and the temperature was increased to 45°C over a period of 2 hours. Subsequently, a 10 wt.% 2-(trifluoromethyl)acrylic acid aqueous solution was gradually added at a rate of 1.5 g/min while the temperature was maintained at 45°C. 180.0 g of the 10 wt.% 2-(trifluoromethyl)acrylic acid aqueous solution was added. Polymerization was performed for a total of 7 hours from the start of heating. After polymerization was completed, the polymer slurry was heat-treated for 60 minutes at 95°C. The polymer slurry was then dehydrated, washed with water, and further dried at 80°C for 20 hours to obtain a vinylidene fluoride polymer C (VDF/TFMA).

With respect to the obtained electrode mixture, solid content concentration change of the slurry and the electrode density at break were measured. The results are shown in Table 1.

[Example 4]

An electrode mixture was prepared in the same manner as in Example 1 except for changing the vinylidene fluoride polymer A (VDF/TFMA) to a vinylidene fluoride polymer D (VDF/TFMA/APS) which was a copolymer of vinylidene fluoride, 2-trifluoromethylacrylic acid, and acryloyloxypropyl succinic acid (APS), and an electrode structure was prepared.

The vinylidene fluoride polymer D (VDF/TFMA/APS) was prepared as follows. In an autoclave with an internal volume of 2 liters, 1060 g of ion-exchanged water, 0.4 g of Metolose SM-100 (available from Shin-Etsu Chemical Co., Ltd.) as a suspending agent, 0.26 g of acryloyloxypropyl succinic acid, 0.53 g of 2-(trifluoromethyl)acrylic acid, 2.20 g of 50 wt.% di-i-propyl peroxydicarbonate (IPP)-freon 225cb solution as a polymerization initiator, and 400 g of vinylidene fluoride (VDF) were charged, and the temperature was increased to 45°C. Subsequently, an acryloyloxypropyl succinic acid/2-(trifluoromethyl)acrylic acid aqueous solution, in which a monomer ratio of a 5 wt.% acryloyloxypropyl succinic acid to 2-(trifluoromethyl)acrylic acid was 1:2, was gradually added at a rate of 0.6 g/min while the temperature was maintained at 45°C. 224.0 g of the acryloyloxypropyl succinic acid/2-(trifluoromethyl)acrylic acid aqueous solution was added. Polymerization was performed for a total of 8 hours from the start of heating. After polymerization was completed, the polymer slurry was heat-treated for 60 minutes at 95°C. The polymer slurry was then dehydrated, washed with water, and further dried at 80°C for 20 hours to obtain a vinylidene fluoride polymer D (VDF/TFMA/APS).

With respect to the obtained electrode mixture, solid content concentration change of the slurry and the electrode density at break were measured. The results are shown in Table 1.

[Example 5]

An electrode mixture was prepared in the same manner as in Example 1 except for changing the electrode active material to NCA811, and an electrode structure was prepared.

With respect to the obtained electrode mixture, solid content concentration change of the slurry and the electrode density at break were measured. The results are shown in Table 1.

[Example 6]

An electrode mixture was prepared in the same manner as in Example 5 except for changing the vinylidene fluoride polymer A (VDF/TFMA) to a vinylidene fluoride polymer E (VDF/TFMA/APS) which was a copolymer of vinylidene fluoride, 2-trifluoromethylacrylic acid, and acryloyloxypropyl succinic acid, and an electrode structure was prepared.

The vinylidene fluoride polymer E (VDF/TFMA/APS) was prepared as follows. In an autoclave with an internal volume of 2 liters, 1213 g of ion-exchanged water, 0.4 g of Metolose SM-100 (available from Shin-Etsu Chemical Co., Ltd.) as a suspending agent, 2.2 g of 50 wt.% di-i-propyl peroxydicarbonate (IPP)-freon 225cb solution as a polymerization initiator, 0.4 g of acryloyloxypropyl succinic acid, 0.4 g of 2-(trifluoromethyl)acrylic acid, and 400 g of vinylidene fluoride (VDF) were charged, and the temperature was increased to 45°C. Subsequently, an acryloyloxypropyl succinic acid/2-(trifluoromethyl)acrylic acid aqueous solution, in which a monomer ratio of a 5 wt.% acryloyloxypropyl succinic acid to 2-(trifluoromethyl)acrylic acid was 1:1, was gradually added at a rate of 0.8 g/min while the temperature was maintained at 45°C. 144.0 g of the acryloyloxypropyl succinic acid/2-(trifluoromethyl)acrylic acid aqueous solution was added. Polymerization was performed for a total of 7 hours from the start of heating. After polymerization was completed, the polymer slurry was heat-treated for 60 minutes at 95°C. The polymer slurry was then dehydrated, washed with water, and further dried at 80°C for 20 hours to obtain a vinylidene fluoride polymer E (VDF/TFMA/APS).

With respect to the obtained electrode mixture, solid content concentration change of the slurry and the electrode density at break were measured. The results are shown in Table 1.

Example 7

An electrode mixture was prepared in the same manner as in Example 1 except for changing the vinylidene fluoride polymer A (VDF/TFMA) to a blend of vinylidene fluoride homopolymer (PVDF) and a vinylidene fluoride polymer C (VDF/TFMA) which is a copolymer of vinylidene fluoride and trifluoromethylacrylic acid, and an electrode structure was prepared. The weight ratio of the vinylidene fluoride homopolymer (PVDF) to the vinylidene fluoride polymer C (VDF/TFMA) was 8:2. As the vinylidene fluoride homopolymer (PVDF), KF#7200 available from Kureha Corporation was used.

With respect to the obtained electrode mixture, solid content concentration change of the slurry and the electrode density at break were measured. The results are shown in Table 2.

Example 8

An electrode mixture was prepared in the same manner as in Example 1 except for changing the vinylidene fluoride polymer A (VDF/TFMA) to a blend of a vinylidene fluoride polymer F (VDF/APS) which is a copolymer of vinylidene fluoride and acryloyloxypropyl succinic acid and a vinylidene fluoride polymer C (VDF/TFMA) which is a copolymer of vinylidene fluoride and trifluoromethylacrylic acid, and an electrode structure was prepared. The weight ratio of the vinylidene fluoride polymer F (VDF/APS) to the vinylidene fluoride polymer C (VDF/TFMA) was 8:2.

The vinylidene fluoride polymer F (VDF/APS) was prepared as follows. An autoclave with an internal volume of 2 liters was charged with 1096 g of ion-exchanged water, 0.2 g of Metolose 90SH-100 (available from Shin-Etsu Chemical Co., Ltd.), 2.2 g of a 50 wt.% diisopropyl peroxy dicarbonate-freon 225cb solution, 426 g of vinylidene fluoride, and an initial addition amount of 0.2 g of cryloyloxypropyl succinic acid, and the temperature was increased to 26°C over 1 hour. Subsequently, a 6 wt.% acryloyloxypropyl succinic acid aqueous solution was gradually added at a rate of 0.5 g/min while the temperature was maintained at 26°C. 63.3 g of the 6 wt.% acryloyloxypropyl succinic acid aqueous solution was added. The obtained polymer slurry was dehydrated and dried to obtain a vinylidene fluoride polymer F (VDF/APS).

With respect to the obtained electrode mixture, solid content concentration change of the slurry and the electrode density at break were measured. The results are shown in Table 2.

Example 9

An electrode mixture was prepared in the same manner as in Example 8 except for changing the electrode active material to NCA811, and an electrode structure was prepared.

With respect to the obtained electrode mixture, solid content concentration change of the slurry and the electrode density at break were measured. The results are shown in Table 2.

Example 10

An electrode mixture was prepared in the same manner as in Example 1 except for changing the vinylidene fluoride polymer A (VDF/TFMA) to a vinylidene fluoride polymer J (VDF/TFMA/MMM) which was a copolymer of vinylidene fluoride, 2-trifluoromethylacrylic acid, and monomethyl maleic acid (MMM), and an electrode structure was prepared.

The vinylidene fluoride polymer J (VDF/TFMA/MMM) was prepared as follows. In an autoclave with an internal volume of 2 liters, 1222 g of ion-exchanged water, 0.4 g of Metolose 90SH-100 (available from Shin-Etsu Chemical Co., Ltd.), 2.0 g of a 50 wt.% diisopropyl peroxydicarbonate-freon 225cb solution, 400 g of vinylidene fluoride, 4 g of monomethyl maleic acid, and an initial addition amount of 0.2 g of 2-(trifluoromethyl)acrylic acid were charged, and the temperature was increased to 45°C over a period of 1 hour. Subsequently, a 10 wt.% 2-(trifluoromethyl)acrylic acid aqueous solution was gradually added at a rate of 0.5 g/min while the temperature was maintained at 45°C. 78 g of the 10 wt.% 2-(trifluoromethyl)acrylic acid aqueous solution was added. The obtained polymer slurry was dehydrated and dried to obtain a vinylidene fluoride polymer J (VDF/TFMA/MMM).

With respect to the obtained electrode mixture, solid content concentration change of the slurry and the electrode density at break were measured. The results are shown in Table 1.

Example 11

An electrode mixture was prepared in the same manner as in Example 1 except for changing the vinylidene fluoride polymer A (VDF/TFMA) to a blend of a vinylidene fluoride polymer I (VDF/AA) which is a copolymer of vinylidene fluoride and acrylic acid and a vinylidene fluoride polymer C (VDF/TFMA) which is a copolymer of vinylidene fluoride and trifluoromethylacrylic acid, and an electrode structure was prepared. The weight ratio of the vinylidene fluoride

polymer I (VDF/AA) to the vinylidene fluoride polymer C (VDF/TFMA) was 8:2.

The vinylidene fluoride polymer I (VDF/AA) was prepared as follows. In an autoclave with an internal volume of 2 liters, 524 g of ion-exchanged water, 0.4 g of hydroxypropyl methylcellulose, 2 g of butyl peroxypivalate, 396 g of vinylidene fluoride, and an initial addition amount of 0.2 g of acrylic acid were charged, and the mixture was heated to 50°C. A 1 wt.% acrylic acid aqueous solution including acrylic acid was continuously supplied to a reactor under a condition of maintaining a constant pressure during polymerization. 380 g of the 1 wt.% acrylic acid aqueous solution was added. Polymerization was performed for a total of 14 hours from the start of heating. After polymerization was completed, the polymer slurry was heat-treated for 60 minutes at 95°C. The polymer slurry was then dehydrated, washed with water, and further dried at 80°C for 20 hours to obtain a vinylidene fluoride polymer I (VDF/AA).

With respect to the obtained electrode mixture, solid content concentration change of the slurry and the electrode density at break were measured. The results are shown in Table 2.

Example 12

An electrode mixture was prepared in the same manner as in Example 1 except for changing the vinylidene fluoride polymer A (VDF/TFMA) to a blend of a vinylidene fluoride polymer K (VDF/MMM) which is a copolymer of vinylidene fluoride and monomethyl maleic acid and a vinylidene fluoride polymer C (VDF/TFMA) which is a copolymer of vinylidene fluoride and trifluoromethylacrylic acid, and an electrode structure was prepared. The weight ratio of the vinylidene fluoride polymer K (VDF/MMM) to the vinylidene fluoride polymer C (VDF/TFMA) was 8:2.

The vinylidene fluoride polymer K (VDF/MMM) was prepared as follows. In an autoclave with an internal volume of 2 liters, 1036 g of ion-exchanged water, 0.8 g of Metolose 90SH-100 (available from Shin-Etsu Chemical Co., Ltd.), 1.6 g of a 50 wt.% diisopropyl peroxydicarbonate-freon 225cb solution, 396 g of vinylidene fluoride, and 4 g of monomethyl maleate were charged, and the temperature was increased to 29°C over a period of 1 hour. Suspension polymerization was then performed while the temperature was maintained at 29°C. The obtained polymer slurry was dehydrated and dried to obtain a vinylidene fluoride polymer K (VDF/MMM).

With respect to the obtained electrode mixture, solid content concentration change of the slurry and the electrode density at break were measured. The results are shown in Table 2.

[Comparative Example 1]

An electrode mixture was prepared in the same manner as in Example 1 except for changing the vinylidene fluoride polymer A (VDF/TFMA) to the vinylidene fluoride polymer F (VDF/APS) of Example 8, and an electrode structure was prepared.

With respect to the obtained electrode mixture, solid content concentration change of the slurry and the electrode density at break were measured. The results are shown in Table 1.

[Comparative Example 2]

An electrode mixture was prepared in the same manner as in Example 1 except for changing the vinylidene fluoride polymer A (VDF/TFMA) to a vinylidene fluoride polymer G (VDF/HFP) which was a copolymer of vinylidene fluoride and hexafluoropropylene (HFP), and an electrode structure was prepared.

The vinylidene fluoride polymer G (VDF/HFP) was prepared as follows. In an autoclave with an internal volume of 2 liters, 1040 g of ion-exchanged water, 0.4 g of Metolose 90SH-100 (available from Shin-Etsu Chemical Co., Ltd.), 1.6 g of a 50 wt.% diisopropyl peroxydicarbonate-freon 225cb solution, 2 g of ethyl acetate, 372 g of vinylidene fluoride, and 28 g of hexafluoropropylene were charged, and suspension polymerization was performed at 29°C. After polymerization was completed, the polymer slurry was dehydrated and washed with water, and the polymer slurry was once again dehydrated and then dried for 20 hours at 80°C to obtain a vinylidene fluoride polymer G (VDF/HFP).

With respect to the obtained electrode mixture, solid content concentration change of the slurry and the electrode density at break were measured. The results are shown in Table 1.

Comparative Example 3

An electrode mixture was prepared in the same manner as in Example 1 except for changing the vinylidene fluoride polymer A (VDF/TFMA) to a vinylidene fluoride polymer H (VDF/CTFE) which was a copolymer of vinylidene fluoride and chlorotrifluoroethylene (CTFE), and an electrode structure was prepared.

The vinylidene fluoride polymer H (VDF/CTFE) was prepared as follows. In an autoclave with an internal volume of 2 liters, 1040 g of ion-exchanged water, 0.4 g of Metolose 90SH-100 (available from Shin-Etsu Chemical Co., Ltd.), 1.6 g of a 50 wt.% diisopropyl peroxydicarbonate-freon 225cb solution, 2 g of ethyl acetate, 372 g of vinylidene fluoride,

and 28 g of chlorotrifluoroethylene were charged, and suspension polymerization was performed at 28°C. After polymerization was completed, the polymer slurry was dehydrated and washed with water, and the polymer slurry was once again dehydrated and then dried for 20 hours at 80°C to obtain a vinylidene fluoride polymer H (VDF/CTFE).

With respect to the obtained electrode mixture, solid content concentration change of the slurry and the electrode density at break were measured. The results are shown in Table 1.

Comparative Example 4

An electrode mixture was prepared in the same manner as in Comparative Example 1 except for changing the electrode active material to NCA811, and an electrode structure was prepared.

With respect to the obtained electrode mixture, solid content concentration change of the slurry and the electrode density at break were measured. The results are shown in Table 1.

Comparative Example 5

An electrode mixture was prepared in the same manner as in Example 1 except for changing the vinylidene fluoride polymer A (VDF/TFMA) to a vinylidene fluoride polymer I (VDF/AA) which was a copolymer of vinylidene fluoride and acrylic acid (AA), and an electrode structure was prepared.

With respect to the obtained electrode mixture, solid content concentration change of the slurry and the electrode density at break were measured. The results are shown in Table 1.

Comparative Example 6

An electrode mixture was prepared in the same manner as in Example 1 except for changing the vinylidene fluoride polymer A (VDF/TFMA) to a vinylidene fluoride polymer L (VDF/HFP/APS) which was a copolymer of vinylidene fluoride, hexafluoropropylene, and acryloyloxypropyl succinic acid, and an electrode structure was prepared.

The vinylidene fluoride polymer L (VDF/HFP/APS) was prepared as follows. In an autoclave with an internal volume of 2 liters, 1217 g of ion-exchanged water, 0.4 g of Metolose 90SH-100 (available from Shin-Etsu Chemical Co., Ltd.), 1.6 g of a 50 wt.% diisopropyl peroxydicarbonate-freon 225cb solution, 400 g of vinylidene fluoride, 8 g of hexafluoropropylene, and an initial addition amount of 0.2 g of acryloyloxypropyl succinic acid were charged, and the temperature was increased to 45°C over a period of 1 hour. Subsequently, a 5 wt.% acryloyloxypropyl succinic acid aqueous solution was gradually added at a rate of 0.5 g/min while the temperature was maintained at 45°C. 76 g of the 6 wt.% acryloyloxypropyl succinic acid aqueous solution was added. The obtained polymer slurry was dehydrated and dried to obtain a vinylidene fluoride polymer L (VDF/HFP/APS).

With respect to the obtained electrode mixture, solid content concentration change of the slurry and the electrode density at break were measured. The results are shown in Table 1.

Comparative Example 7

An electrode mixture was prepared in the same manner as in Example 1 except for changing the vinylidene fluoride polymer A (VDF/TFMA) to a vinylidene fluoride polymer K (VDF/MMM) which was a copolymer of vinylidene fluoride and monomethyl maleic acid, and an electrode structure was prepared.

With respect to the obtained electrode mixture, solid content concentration change of the slurry and the electrode density at break were measured. The results are shown in Table 1.

Table 1

| | Positive electrode active material | Monomer A | Monomer B | Monomer C | Number of parts of Monomer B | Introduced amount of Monomer B (mol%) | Number of parts of Monomer C | Introduced amount of Monomer C (mol%) | Cl content of overall polymer (ppm) | Electrode density at break [g/cm$^3$] | $NV_A/NV_B$ |
|---|---|---|---|---|---|---|---|---|---|---|---|
| Example 1 | LCO | VDF | TFMA | - | 1 | 0.48 | - | - | 0 | 4.1 | 1.04 |
| Example 2 | LCO | VDF | TFMA | - | 2 | 0.60 | - | - | 0 | 4.2 | 1.05 |
| Example 3 | LCO | VDF | TFMA | - | 5 | 2.66 | - | - | 0 | 4.1 | 1.05 |
| Example 4 | LCO | VDF | TFMA | APS | 2 | 0.94 | 1 | 0.18 | 0 | 3.9 | 1.04 |
| Example 5 | NCA811 | VDF | TFMA | - | 1 | 0.48 | - | - | 0 | 3.6 | 1.06 |
| Example 6 | NCA811 | VDF | TFMA | APS | 1 | 0.42 | 1 | 0.20 | 0 | 3.4 | 1.17 |
| Example 10 | LCO | VDF | TFMA | MMM | 2 | 1.03 | 1 | 0.36 | 0 | 4.0 | 1.06 |
| Comparative Example 1 | LCO | VDF | APS | - | 1 | 0.36 | - | - | 0 | 3.7 | 1.11 |
| Comparative Example 2 | LCO | VDF | HFP | - | 4 | 1.62 | - | - | 0 | 4.1 | 1.14 |
| Comparative Example 3 | LCO | VDF | CTFE | - | 4 | 2.70 | - | - | 12500 | 4.1 | 1.11 |
| Comparative Example 4 | NCA811 | VDF | APS | - | 1 | 0.36 | - | - | 0 | 3.4 | 1.19 |
| Comparative Example 5 | LCO | VDF | AA | - | 1 | 1.85 | - | - | 0 | 3.7 | 1.04 |
| Comparative Example 6 | LCO | VDF | HFP | APS | 2 | 0.67 | 1 | 0.21 | 0 | 3.9 | 1.15 |
| Comparative Example 7 | LCO | VDF | MMM | - | 1 | 0.45 | - | - | 0 | 3.9 | 1.16 |

[Table 2]

| | Positive electrode active material | Polymer A | Polymer B | Cl content of overall polymer (ppm) | Polymer blend ratio A:B | Electrode density at break [g/cm$^3$] | $NV_A/NV_B$ |
|---|---|---|---|---|---|---|---|
| Example 7 | LCO | PVDF | VDF/ TFMA 5 parts | 0 | 8:2 | 4.0 | 1.07 |
| Example 8 | LCO | VDF/APS | VDF/ TFMA 5 parts | 0 | 8:2 | 3.8 | 1.05 |
| Example 9 | NCA811 | VDF/APS | VDF/ TFMA 5 parts | 0 | 8:2 | 3.4 | 1.15 |
| Example 11 | LCO | VDF/AA | VDF/ TFMA 5 parts | 0 | 8:2 | 3.9 | 1.04 |
| Example 12 | LCO | VDF/MMM | VDF/ TFMA 5 parts | 0 | 8:2 | 4.0 | 1.15 |

As shown in Tables 1 and 2, it was observed that, in each of the electrode mixtures in which the vinylidene fluoride polymer (VDF/TFMA) was used in the binder composition, solid content concentration change of the electrode mixture slurry in a lower part of a container was suppressed even after four days of storage.

Furthermore, it was observed that, in each of the electrode mixtures in which the vinylidene fluoride polymer (VDF/TFMA) was used in the binder composition, breakage of the electrode structure was suppressed.

[Industrial Applicability]

The present invention can be utilized for a lithium-ion secondary battery.

**REFERENCE SIGNS LIST**

1 Positive electrode

2 Negative electrode

3 Separator

5 Metal casing

10 Electrode structure

11 Current collector

12a, 12b Electrode mixture layer

**Claims**

**1.** A binder composition that is used for binding an electrode active material to a current collector,

the binder composition containing a first vinylidene fluoride polymer,
the first vinylidene fluoride polymer containing a constituent unit derived from vinylidene fluoride and a constituent unit derived from a monomer represented by Formula (1):

[Chem. 1]

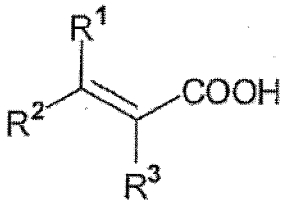

・・・ (1)

where any one of $R^1$, $R^2$, and $R^3$ is a fluorine atom or a fluorine-substituted alkyl group having from 1 to 6 carbon atoms, and the rest is a hydrogen atom or an alkyl group having from 1 to 6 carbon atoms.

**2.** The binder composition according to claim 1, wherein the first vinylidene fluoride polymer further contains a constituent unit derived from a monomer represented by Formula (2):

[Chem. 2]

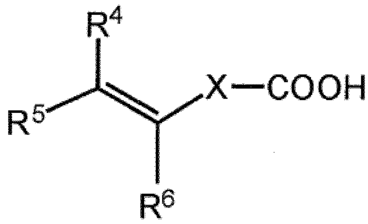

・・・ (2)

where $R^4$ is a hydrogen atom, an alkyl group having from 1 to 5 carbon atoms, or a carboxyl group substituted with an alkyl group having from 1 to 5 carbon atoms, $R^5$ and $R^6$ are each independently a hydrogen atom or an alkyl group having from 1 to 5 carbon atoms, and X is a single bond or an atomic group having a main chain formed of from 1 to 20 atoms and having a molecular weight of 500 or less.

**3.** The binder composition according to claim 1 or 2, wherein, in the monomer represented by Formula (1) above, $R^1$ and $R^2$ are each a hydrogen atom or an alkyl group having from 1 to 6 carbon atoms, and $R^3$ is a fluorine atom or a fluorine-substituted alkyl group having from 1 to 6 carbon atoms.

**4.** The binder composition according to any one of claims 1 to 3, wherein the binder composition further contains a second vinylidene fluoride polymer that is different from the first vinylidene fluoride polymer,
the second vinylidene fluoride polymer containing
a vinylidene fluoride homopolymer or
a constituent unit derived from vinylidene fluoride and a constituent unit derived from an unsaturated carboxylic acid-based monomer.

**5.** The binder composition according to any one of claims 1 to 4, wherein a chlorine amount in the binder composition is 1000 ppm or less.

**6.** An electrode mixture comprising the binder composition described in any one of claims 1 to 5 and an electrode active material.

**7.** The electrode mixture according to claim 6, comprising a solvent.

**8.** An electrode structure comprising:

a current collector; and an electrode mixture layer provided on the current collector,
the electrode mixture layer being a layer formed by using the electrode mixture described in claim 6 or 7.

**9.** A method of producing an electrode structure, the method comprising
coating a surface of a current collector with the electrode mixture described in claim 7 and drying to form a coating film on the surface of the current collector, and
heat-treating the coating film.

**10.** A secondary battery comprising the electrode structure described in claim 8.

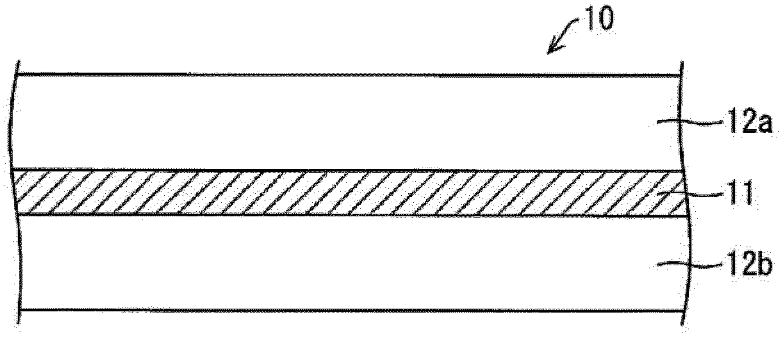


FIG. 1

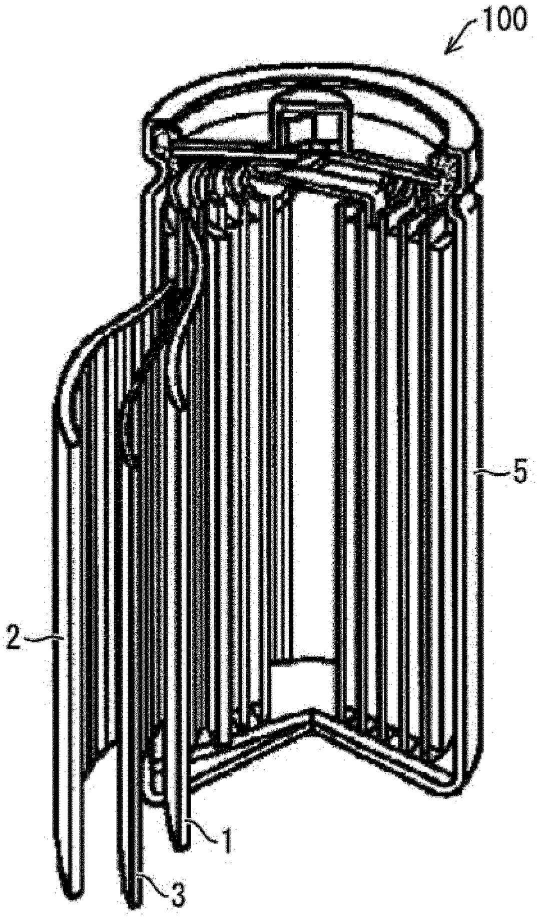


FIG. 2

**INTERNATIONAL SEARCH REPORT**

International application No. PCT/JP2019/019381

A. CLASSIFICATION OF SUBJECT MATTER
Int. Cl. H01M4/62(2006.01)i, C08F214/22(2006.01)i, H01M4/139(2010.01)i

According to International Patent Classification (IPC) or to both national classification and IPC

B. FIELDS SEARCHED
Minimum documentation searched (classification system followed by classification symbols)
Int. Cl. H01M4/62, C08F214/22, H01M4/139

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>Y | US 2017/0204308 A1 (NINGDE CONTEMPORARY AMPEREX TECHNOLOGY LIMITED) 20 July 2017, claims, paragraphs [0034], [0054]-[0067], examples 9-10, 19-22, table 7 & CN 105514488 A | 1, 3, 5-8, 10<br>2, 4, 9 |
| Y | WO 2017/056974 A1 (KUREHA CORP.) 06 April 2017, claims, examples 1-9 & US 2018/0269484 A1, claims, examples 1-9 & EP 3358662 A1 & KR 10-2018-0021773 A & CN 108040504 A | 2, 4 |
| Y | WO 2018/008262 A1 (KUREHA CORP.) 11 January 2018, claims, examples 1-3 & EP 3483962 A1, claims, examples 1-3 & CN 109075344 A & KR 10-2018-0132784 A | 2 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29.07.2019 | 06.08.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/019381

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2015/151529 A1 (NIPPON ZEON CO., LTD.) 08 October 2015, paragraphs [0101]-[0104] & US 2017/0110734 A1, paragraphs [0206]-[0211] & KR 10-2016-0140631 A & CN 106104859 A | 9 |
| Y | JP 2008-186785 A (SONY CORP.) 14 August 2008, paragraphs [0070], [0071] (Family: none) | 9 |
| A | WO 2017/129881 A1 (ARKEMA FRANCE) 03 August 2017, examples 3-4 & US 2019/0062476 A1, examples 3-4 & JP 2019-509365 A | 1-10 |
| A | JP 2000-228218 A (UDAGAWA, Reiko) 15 August 2000, claims (Family: none) | 1-10 |
| A | JP 2012-219125 A (KUREHA CORP.) 12 November 2012, claims & CN 102731707 A & KR 10-2012-0113659 A | 1-10 |
| A | JP 2017-115102 A (SAMSUNG SDI CO., LTD.) 29 June 2017, claims & KR 10-2017-0077020 A | 1-10 |
| A | JP 2017-117754 A (SAMSUNG SDI CO., LTD.) 29 June 2017, claims & KR 10-2017-0077020 A | 1-10 |
| A | WO 2010/055858 A1 (KUREHA CORP.) 20 May 2010, examples 1-2 & KR 10-2011-0060930 A & CN 1022187499 A | 1-10 |
| A | WO 2010/074041 A1 (KUREHA CORP.) 01 July 2010, example 1 & KR 10-2011-0060931 A & CN 102187503 A | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002313345 A